Europäisches Patentamt

European Patent Office

Office européen des brevets

(11) Numéro de publication: **0 298 835**
**A1**

## DEMANDE DE BREVET EUROPEEN

(21) Numéro de dépôt: **88401666.8**

(22) Date de dépôt: **29.06.88**

(51) Int. Cl.⁴: **F 16 C 17/03**
F 16 C 33/10, F 16 C 37/00

(30) Priorité: **29.06.87 FR 8709125**

(43) Date de publication de la demande:
**11.01.89 Bulletin 89/02**

(84) Etats contractants désignés: **CH DE GB LI**

(71) Demandeur: **FLENDER-GRAFFENSTADEN**
**156 Route de Lyon**
**F-67400 Illkirch-Graffenstaden (FR)**

(72) Inventeur: **Barresi, Francesco**
**2, résidence les Fleurs**
**F-67380 Lingolsheim (FR)**

(74) Mandataire: **Serin, Jean-Pierre et al**
**Cabinet PIERRE LOYER 77, rue Boissière**
**F-75116 Paris (FR)**

(54) **Coussinet à patins.**

(57) Coussinet à patins hydrodynamique, dont l'un au moins des patins est chargé par les efforts de l'arbre tournant dans le coussinet, caractérisé par le fait que l'un au moins des patins non chargés (3) est pourvu sur sa face interne d'une rainure (5) située dans un plan perpendiculaire à l'axe du coussinet (1) et allant d'une extrémité du patin à l'autre dans laquelle peut circuler l'huile de lubrification qui lui transmet la chaleur dégagée par les frottements sur le ou les patins chargés (4) afin d'abaisser la température de fonctionnement du coussinet.

Fig. 1

EP 0 298 835 A1

## Description

## Coussinet à patins

L'invention concerne un coussinet à patins.

Les coussinets à patins sont utilisés pour le montage d'arbres de transmission et de machines tournantes. Les patins de ces coussinets, en nombre variable, sont constitués en un métal antifriction qui permet de réduire au maximum les frottements, l'huile circulant entre l'arbre et les patins procure une portance à l'arbre et servant également au refroidissement du coussinet.

L'utilisation des coussinets à patins connaît pourtant une limite importante aux grandes vitesses. En effet, plus la vitesse de rotation est élevée, plus l'échauffement des patins, et donc du coussinet, est important.

Or le métal d'antifriction qui constitue ou recouvre les patins a un point de fusion relativement bas. De ce fait, les patins ne peuvent fonctionner que jusqu'à une certaine température, ce qui réduit les possibilités d'emploi de ces coussinets, notamment lorsque l'on désire des vitesses de rotation élevées.

L'échauffement se fait d'autre part sentir beaucoup plus fortement sur le ou les patins supportant, en régime normal, les efforts de l'arbre sur le coussinet, que sur les autres patins qui ne jouent qu'un rôle de guidage ou de maintien pendant le démarrage et les phases de transition. De ce fait, alors que la température moyenne du coussinet pourrait encore se trouver dans un domaine acceptable, la température du ou des patins chargés est à un niveau tel que toute augmentation de la vitesse de rotation provoquerait un échauffement non supportable pour ces patins et l'ensemble du coussinet.

L'objet de l'invention est donc de permettre un élargissement des possibilités d'emploi des coussinets à patins en autorisant des vitesses de rotation plus élevées, par une meilleure répartition de la chaleur dégagée en fonctionnement dans le coussinet, empêchant ainsi une élévation critique de la température des patins chargés à ces vitesses et diminuant de ce fait la température de fonctionnement de l'ensemble du coussinet.

Ce but est atteint selon l'invention en ce que l'un au moins des patins est chargé par les efforts de l'arbre tournant dans le coussinet, caractérisé par le fait que l'un au moins des patins non chargés est pourvu sur sa face interne d'une rainure située dans un plan perpendiculaire à l'axe du coussinet et allant d'une extrémité du patin à l'autre dans laquelle peut circuler l'huile de lubrification qui lui transmet la chaleur dégagée par les frottements sur le ou les patins chargés afin d'abaisser la température de fonctionnement du coussinet.

Avantageusement, selon l'invention cette rainure est pratiquée sur tous les patins non chargés. On obtient ainsi une bonne transmission de la chaleur des patins chargés tout en gardant une bonne portance pour l'arbre sur ces patins chargés.

L'invention sera mieux comprise au moyen d'un exemple de réalisation représenté sur le dessin annexé dont :

La figure 1 représente schématiquement un arbre tournant dans un coussinet à patins, les proportions ayant été modifiées pour mieux faire ressortir les conditions de fonctionnement.

La figure 2 représente, en perspective, un des patins non chargés pourvu de la rainure selon l'invention.

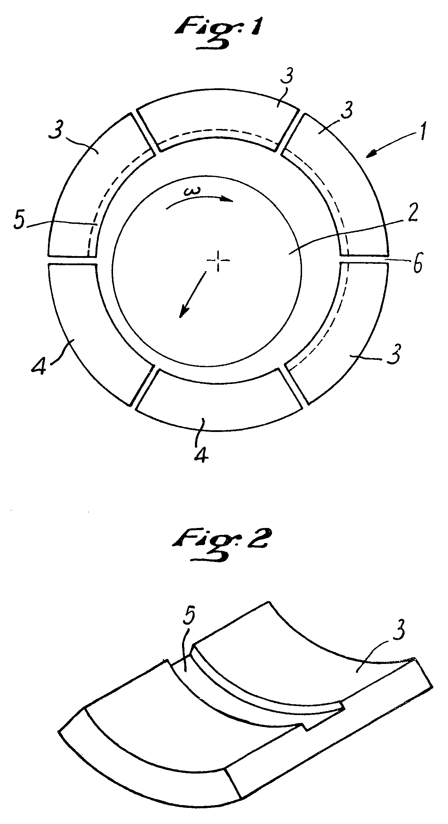

Selon la figure 1, un arbre 2 tourne dans un coussinet 1 dont on n'a représenté que les patins. Le coussinet 1 comporte, dans cet exemple, six patins 3 et 4. Les quatre patins 3 sont pourvus sur leur face interne d'une rainure 5 allant d'une extrémité du patin à l'autre et située dans un plan perpendiculaire à l'axe de rotation. L'arbre 2 s'appuie, sous l'effet de la force F (créée par son poids et par des efforts radiaux et tangentiels sur l'arbre) sur les deux patins 4. Les autres patins 3 ne servent qu'au guidage de l'arbre pendant sa rotation et à son maintien pendant les phases de démarrages et les régimes transitoires. Lorsque la vitesse de rotation ω de fonctionnement est atteinte, ce sont les deux patins 4 qui supportent l'essentiel des efforts de l'arbre sur le coussinet. L'arbre 2 est soutenu par la portance créée par l'huile qui circule entre lui et les patins et qui arrive radialement par les interstices 6 entre les patins. Cette huile circule également dans la rainure 5 des patins 3 et est évacuée sur les côtés.

Grâce à cette rainure 5, la chaleur dégagée par frottement sur les patins 4 est transmise aux patins 3 par l'huile circulant dans la rainure 5 et évacuée par les moyens de refroidissement usuels. On obtient ainsi un abaissement important de la température de fonctionnement du coussinet, notamment des patins 4, ce qui permet d'utiliser celui-ci pour des vitesses de rotation plus importantes.

De plus, les rainures n'étant pratiquées que dans les patins non chargés, la portance générale du coussinet n'en est pas affectée.

Des essais ont été faits notamment avec des coussinets de 80 mm de diamètre. L'arbre tournant à 23.000 t/mn, un abaissement de la température de 100° (avec des patins classiques) à 85°C avec des patins selon l'invention a été constaté, soit un gain de 15°C.

## Revendications

1. Coussinet à patins, dont l'un au moins des patins est chargé par les efforts de l'arbre tournant dans le coussinet, caractérisé par le fait que l'un au moins des patins non chargés (3) est pourvu sur sa face interne d'une rainure (5) située dans un plan perpendiculaire à l'axe du coussinet et allant d'une extrémité du patin à l'autre dans laquelle peut circuler l'huile de lubrification qui lui transmet la chaleur dégagée par les frottements sur le ou les patins chargés (4) afin d'abaisser la température de fonctionnement du coussinet.

2. Coussinet à patins selon la revendication 1, caractérisé par le fait que tous les patins non chargés (3) sont pourvus de ladite rainure (5).

0298835

*Fig.1*

*Fig.2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 154 217  (WESTINGHOUSE ELECTRIC CORP.) <br> * Pages 11,12; figure 1 * <br> --- | 1 | F 16 C   17/03 <br> F 16 C   33/10 <br> F 16 C   37/00 |
| X | GB-A-  852 408  (THE GLACIER METAL CO., LTD) <br> * Colonne 2; figures * | 1 | |
| A | | 2 | |
| A | US-A-3 449 028  (A.O. DE HART) <br> ----- | | |

DOMAINES TECHNIQUES RECHERCHES (Int. Cl.4)

F 16 C

**Le présent rapport a été établi pour toutes les revendications**

| Lieu de la recherche | Date d'achèvement de la recherche | Examinateur |
|---|---|---|
| LA HAYE | 30-09-1988 | BEGUIN C.P. |